# EUROPEAN PATENT APPLICATION

(11) **EP 4 624 746 A1**
(43) Date of publication of application: **01.10.2025**
(21) Application number: 25160635.6
(22) Date of filing: 27.02.2025
(51) Int. Cl.: F02M 21/02, F02D 41/22

(54) **ENGINE SYSTEM**

(30) Priority: 18.03.2024 JP 2024042187
(71) Applicant: Yanmar Holdings Co., Ltd., Osaka-shi, Osaka (JP)
(72) Inventor: TOSHINAGA, Kazuteru, Osaka (JP); MATSUNAGA, Daichi, Osaka (JP); HAMAOKA, Shunji, Osaka (JP); UEHARA, Hiroshi, Osaka (JP)
(74) Representative: Novagraaf International SA

(57) **Abstract**

[Problem] An engine system that can cope with a fuel gas that leaks from an engine and contains a toxic substance is provided.

[Solution] An engine system 1 including an engine 2 that operates by a fuel containing a toxic substance includes a case 7 that surrounds the engine 2 and a fuel detector 8 that is disposed inside or outside the case 7 and detects the fuel that has leaked to the outside of the engine 2. The fuel is detected by using the fuel detector 8 disposed at a lower portion of the case 7 when the vapor specific gravity of the fuel is higher than a predetermined threshold. The fuel is detected by using the fuel detector 8 disposed at an upper portion of the case 7 when the vapor specific gravity of the fuel is lower than the predetermined threshold. The fuel containing the toxic substance is either ammonia or methanol.

## Description

### TECHNICAL FIELD

The present invention relates to an engine system including an engine that operates by a fuel containing a toxic substance (deleterious substance prescribed in the Poisonous and Deleterious Substances Control Act in Japan) such as ammonia or methanol.

### BACKGROUND ART

Conventionally, some engines operate by a fuel containing a toxic substance such as ammonia or methanol. In an engine system including such an engine, there is a concern that the toxic substance contained in the fuel may adversely affect a human body, and the like. Therefore, it is required to take a detoxification method for removing the toxic substance in order to protect the human body.

For example, a fuel supply apparatus disclosed in Patent Document 1 includes, for an engine, a fuel supply line extending from a fuel tank that stores any one kind of fuel selected from liquefied ammonia, liquefied petroleum gas, and methanol to the engine via a recovery tank, and a fuel return line that returns part of the fuel from the engine to the recovery tank. An oil removal and recovery device is installed on the fuel return line to the recovery tank or in the recovery tank. Further, the fuel supply apparatus includes a gas-liquid separator for separating the fuel into a vaporized ammonia gas, liquefied ammonia, and oil through introduction of the fuel into the gas-liquid separator on the fuel return line that returns part of the fuel from the engine to the recovery tank. Moreover, a detoxification device that generates an ammonia solution through introduction of the vaporized ammonia gas separated by the gas-liquid separator and water into the detoxification device is disposed.

### PRIOR ART DOCUMENT

### PATENT DOCUMENT

Patent Document 1: Japanese Unexamined Patent Publication No. 2023-055419

### SUMMARY OF INVENTION

### TECHNICAL PROBLEM

In a conventional engine system, the detoxification device is disposed in order to remove the toxic substance such as ammonia. However, the cost becomes high because the detoxification device is expensive. Further, there is a possibility that the structure of the engine system becomes complicated due to a configuration for disposing the detoxification device. Moreover, in the conventional engine system, although the toxic substance such as ammonia can be removed in the fuel supply apparatus as in Patent Document 1, it is not possible to cope with a fuel gas that leaks from the engine and contains the toxic substance.

An object of the present invention is to provide an engine system that can cope with a fuel gas that leaks from an engine and contains a toxic substance.

### SOLUTION TO PROBLEM

In order to solve the above-described problem, an engine system of the present invention is an engine system including an engine that operates by a fuel containing a toxic substance. The engine system includes a case that surrounds the engine and a fuel detector that is disposed inside or outside the case and detects the fuel that has leaked to the outside of the engine. The fuel is detected by using the fuel detector disposed at a lower portion of the case when the vapor specific gravity of the fuel is higher than a predetermined threshold. The fuel is detected by using the fuel detector disposed at an upper portion of the case when the vapor specific gravity of the fuel is lower than the predetermined threshold.

### ADVANTAGEOUS EFFECTS OF INVENTION

According to the present invention, the engine system that can cope with the fuel gas that leaks from the engine and contains the toxic substance is provided.

### BRIEF DESCRIPTION OF DRAWINGS

FIG. 1 is a schematic diagram illustrating an example of an engine system according to an embodiment of the present invention.
FIG. 2 is a schematic diagram illustrating an example of a cylinder of an engine in the engine system according to the embodiment of the present invention.
FIG. 3 is a schematic diagram illustrating an example of the engine system according to the embodiment of the present invention.
FIG. 4 is a schematic diagram illustrating another example of the engine system according to the embodiment of the present invention.
FIG. 5 is a schematic diagram illustrating another example of the engine system according to the embodiment of the present invention.

### DESCRIPTION OF EMBODIMENTS

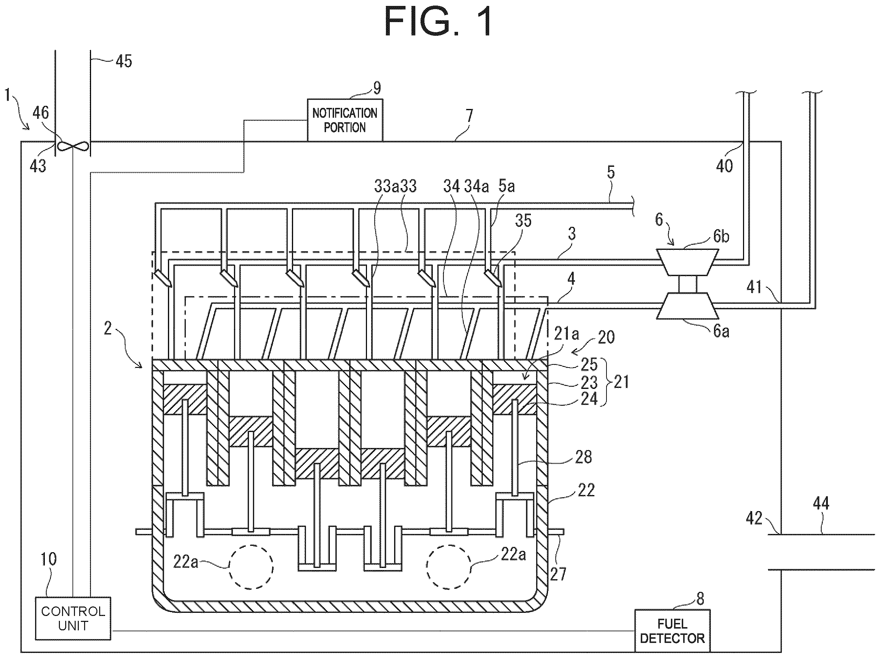

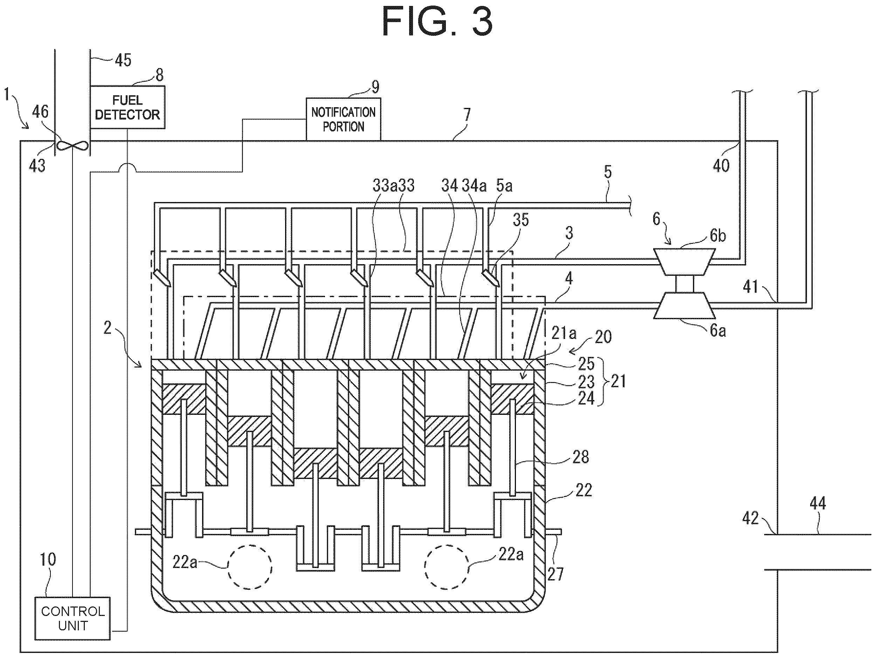

An engine system 1, which is an embodiment of the present invention, will be described with reference to the drawings. As illustrated in FIGs. 1 and 3, the engine system 1 includes an engine 2, an intake passage 3, an exhaust passage 4, a fuel supply path 5, a turbocharger 6, a case 7, a fuel detector 8, a notification portion 9, and a control unit 10.

In the present embodiment, in particular, the engine system 1 operate by loading a fuel containing a toxic substance (deleterious substance prescribed in the Poisonous and Deleterious Substances Control Act in Japan) such as ammonia or methanol into combustion chambers 21a of the engine 2. The fuel is supplied to the combustion chambers 21a as a mixture with air (fuel gas). This engine system 1 is installed in a building, a housing, or a mobile object (for example, automobile, ship, or airplane).

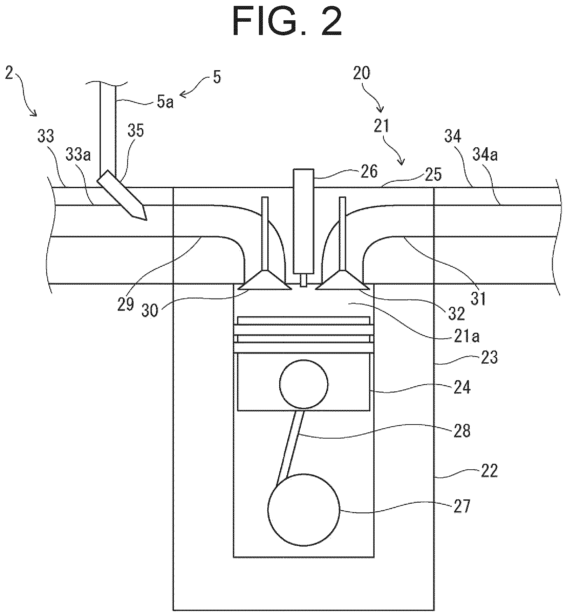

The engine 2 is, for example, a four-stroke engine, and includes a plurality of cylinders 21 and a crankcase 22 in a cylinder block 20. In FIGs. 1 and 3, six cylinders 21 are illustrated. However, the number of cylinders 21 is not limited to six. In FIG. 2, only one cylinder 21 among the plurality of cylinders 21 is illustrated. As illustrated in FIGs. 1, 2, and 3, each of the cylinders 21 includes a cylinder body 23, a piston 24, and a cylinder head 25.

The cylinder body 23 is, for example, formed into a cylindrical shape in the cylinder block 20, and the piston 24 is slidably housed in the cylinder body 23. The cylinder head 25 is attached to the upper side of the cylinder body 23. The combustion chamber 21a is formed inside the cylinder body 23 and the cylinder head 25. As illustrated in FIG. 2, the cylinder head 25 is provided with an ignition device 26 for igniting the fuel in the combustion chamber 21a. The ignition device 26 may be formed of a micro pilot type device that injects a small amount of liquid fuel, or may be formed of a spark ignition type device that uses an ignition plug. Alternatively, the ignition device 26 may have a configuration in which a mixture of a gas fuel and a liquid fuel is subjected to compression ignition.

Each cylinder body 23 of the cylinders 21 communicates with the crankcase 22. A crankshaft 27 is rotatably supported by the crankcase 22. The piston 24 of each cylinder 21 is connected to the crankshaft 27 through a connecting rod 28, and a reciprocating motion of the piston 24 is converted to a rotational motion of the crankshaft 27 through the connecting rod 28. Further, the crankcase 22 has explosion-proof valves 22a (pressure valves) in order to let out the internal pressure because there is a possibility that an explosion occurs and the crankcase 22 is damaged when the internal pressure exceeds a certain level.

As illustrated in FIG. 2, the cylinder head 25 has an intake port 29 that communicates with the combustion chamber 21a and an intake valve 30 that opens and closes the intake port 29. The combustion chamber 21a is connected to the intake passage 3 through the intake port 29, and a mixture (fuel gas) of air supplied from the intake passage 3 and the fuel is introduced into the combustion chamber 21a. The cylinder head 25 has an exhaust port 31 that communicates with the combustion chamber 21a and an exhaust valve 32 that opens and closes the exhaust port 31. The combustion chamber 21a is connected to the exhaust passage 4 through the exhaust port 31, and an exhaust gas generated in the combustion chamber 21a is discharged to the exhaust passage 4.

**In** order to connect the intake passage 3 and the plurality of cylinders 21, an intake manifold 33 having branch intake flow paths 33a branching from the intake passage 3 to the respective intake ports 29 of the cylinders 21 is disposed between the intake passage 3 and the engine 2. **In** order to connect the exhaust passage 4 and the plurality of cylinders 21, an exhaust manifold 34 having branch exhaust flow paths 34a branching from the exhaust passage 4 to the cylinders 21 is disposed between the exhaust passage 4 and the engine 2. In FIGs. 1 and 3, the intake manifold 33 is indicated by a dashed line, and the exhaust manifold 34 is indicated by a one-dot-chain line.

The intake passage 3 is connected to the plurality of cylinders 21 of the engine 2, and supplies compressed and cooled air to each cylinder 21. The mixture of the air supplied from the intake passage 3 and the fuel that is supplied from a fuel tank (not illustrated) through the fuel supply path 5 and contains a toxic substance is supplied to the combustion chamber 21a of each cylinder 21. The intake passage 3 is provided with the turbocharger 6 disposed on the upstream side in the intake direction. The turbocharger 6 compresses the air flowing through the intake passage 3 or the mixture of the fuel and the air, and sends out the compressed air or mixture toward the downstream side in the intake direction. The intake passage 3 may be provided with an air filter (not illustrated) that purifies fresh air and introduces the air into the intake passage 3, and an intercooler (not illustrated) that cools the air flowing through the intake passage 3.

The exhaust passage 4 is connected to the plurality of cylinders 21 of the engine 2, and allows the exhaust gas generated in each cylinder 21 to flow therethrough and be discharged.

The fuel supply path 5 supplies the fuel supplied from the fuel tank (not illustrated) to the engine 2. For example, the fuel supply path 5 has a plurality of branch fuel paths 5a made to branch for allowing the fuel to flow toward each of the cylinders 21, and a plurality of main fuel supply devices 35 each disposed at the terminal end of a respective one of the branch fuel paths 5a for supplying the fuel to the respective combustion chambers 21a of the cylinders 21. The main fuel supply device 35 includes, for example, a gas admission valve, a gas injector, or the like. For example, the plurality of main fuel supply devices 35 are disposed to inject the fuel to the plurality of branch intake flow paths 33a of the intake manifold 33 disposed for each of the cylinders 21.

The turbocharger 6 compresses the air flowing through the intake passage 3 or the mixture and sends out the compressed air or mixture to the downstream side in the intake direction. The turbocharger 6 includes a turbine 6a and a compressor 6b. The turbine 6a is disposed on the exhaust passage 4, and the compressor 6b is disposed on the intake passage 3. The turbine 6a is rotated by the exhaust gas flowing through the exhaust passage 4, and the compressor 6b is driven by the rotational force of the turbine 6a. This compresses the air flowing through the intake passage 3 or the mixture.

The case 7 is disposed in the building, the housing, or the mobile object in which the engine system 1 is installed, and is configured to surround the engine 2.

For example, the case 7 has a plurality of plate members that are formed of steel plates and surround the engine 2 from various directions (frontrear direction, left-right direction, upward-downward direction, oblique directions with respect to these directions, and the like), and is configured to cover the engine 2 by these plate members without a gap. This allows the case 7 to have high airtightness and improve internal pressure controllability. The case 7 may have a beam member or a column member that supports the plate member and is made of steel.

Alternatively, the case 7 may have a sheet-shaped member or a hood-shaped member supported by the beam member or the column member instead of or in addition to the plate members, and be configured to cover the engine 2.

Alternatively, the case 7 may be formed by disposing the plurality of plate members, the sheet-shaped member, or the hood-shaped member including a gap, or be formed by disposing only one plate member. This allows the case 7 to have airtightness depending on the state of the engine 2 and the fuel and be formed at low cost. The case 7 may be formed by disposing a lattice-shaped member supported by the beam member or the column member, or be formed by disposing only the beam members or the column members.

The case 7 has an intake inlet 40 for taking in air to be supplied to the engine 2 from the outside of the case 7, and an exhaust outlet 41 for discharging the exhaust gas emitted from the engine 2 to the outside of the case 7. Moreover, the case 7 has a ventilation inlet 42 for introducing ventilation air from the outside of the case 7 into the inside in order to ventilate the inside of the case 7, and a ventilation outlet 43 for discharging the ventilation air resulting from the ventilation of the inside of the case 7 to the outside of the case 7.

The intake inlet 40 and the ventilation inlet 42 are disposed independently of the exhaust outlet 41. For example, the intake inlet 40 and the ventilation inlet 42 are disposed separately from the exhaust outlet 41 by a predetermined distance or longer and/or disposed with a different opening direction from the exhaust outlet 41. In particular, the intake inlet 40 and the ventilation inlet 42 are disposed independently of the ventilation outlet 43. For example, the intake inlet 40 and the ventilation inlet 42 are disposed separately from the ventilation outlet 43 by a predetermined distance or longer and/or disposed with a different opening direction from the ventilation outlet 43.

A ventilation introduction passage 44 is connected to the ventilation inlet 42, and allows the ventilation inlet 42 leading to the inside of the case 7 to communicate with the outside of the case 7. The ventilation air is introduced from the outside of the case 7 into the inside of the case 7 through the ventilation introduction passage 44 and the ventilation inlet 42.

A ventilation discharge passage 45 is connected to the ventilation outlet 43, and allows the ventilation outlet 43 leading to the inside of the case 7 to communicate with the outside of the building, the housing, or the mobile object in which the engine 2 is installed. The ventilation discharge passage 45 is configured to be sealed except for both ends including the ventilation outlet 43, and has a structure that prevents the discharged ventilation air from leaking at an intermediate portion. The ventilation air is discharged from the inside of the case 7 to the outside of the building, the housing, or the mobile object through the ventilation outlet 43 and the ventilation discharge passage 45.

The case 7 includes a ventilation fan 46 at the ventilation outlet 43 or in the ventilation discharge passage 45. The ventilation fan 46 is configured to be actuated by being controlled by the control unit 10 and draw the ventilation air inside the case 7 and discharge the ventilation air from the ventilation outlet 43 or the ventilation discharge passage 45. The case 7 may include one ventilation fan 46 or include two or more ventilation fans 46. For example, the ventilation fan 46 is controlled by the control unit 10 to be always actuated during operation of the engine 2. The ventilation fan 46 may be configured to change the actuation intensity, that is, the intensity of the drawing, in accordance with control by the control unit 10.

As an example of the case 7 formed to include a gap, the case 7 may be formed by disposing plate members such that the case 7 has a gap in a lower portion thereof when the fuel gas having vapor specific gravity lower than 1 (predetermined threshold) is used as the mixture that is supplied to the combustion chambers 21a and is composed of the fuel and air. **In** this case, it is sufficient for the intake inlet 40 and the ventilation inlet 42 to be disposed in the lower portion of the case 7 or the gap thereof so as to introduce the air from the lower side of the case 7 or the periphery of the lower portion, and it is sufficient for the ventilation outlet 43 to be disposed in an upper portion of the case 7 so as to discharge the air to the upper side of the case 7 or the periphery of the upper portion.

Further, the case 7 may be formed by disposing plate members such that the case 7 has a gap in the upper portion thereof when the fuel gas having vapor specific gravity higher than 1 (predetermined threshold) is used as the mixture that is supplied to the combustion chambers 21a and is composed of the fuel and air. **In** this case, it is sufficient for the intake inlet 40 and the ventilation inlet 42 to be disposed in the upper portion of the case 7 so as to introduce the air from the upper side of the case 7 or the periphery of the upper portion, and it is sufficient for the ventilation outlet 43 to be disposed in the lower portion of the case 7 so as to discharge the air to the lower side or the periphery of the lower portion.

Moreover, as an example of the shape of the case 7, the case 7 includes a roof portion formed of a plate member having a height difference in the upper portion of the case 7 when the fuel gas having vapor specific gravity lower than 1 is used as the mixture that is supplied to the combustion chambers 21a and is composed of the fuel and air. This allows the case 7 to generate a density difference inside the upper portion thereof. This can prevent convection of the air by using a rise of the air due to this density difference. Thus, the fuel gas that leaks from the engine 2 can be efficiently discharged by ventilation. In this case, it is sufficient for the ventilation outlet 43 to be disposed at the uppermost portion of the roof portion of the case 7 so as to discharge the air to the upper side of the case 7 or the periphery of the upper portion. Specifically, the case 7 includes the roof portion having an isosceles triangle shape or a right triangle shape.

Further, when the fuel gas having vapor specific gravity higher than 1 is used as the mixture that is supplied to the combustion chambers 21a and is composed of the fuel and air, the case 7 includes a receiving portion such as a pit (groove) or a receiving tray on a bottom surface inside the case 7 or on the upper side of the bottom surface. This allows the case 7 to receive the fuel gas that leaks from the engine 2 by the receiving portion at the inside of the lower portion. This can facilitate the discharge of the fuel gas and suppress the stagnation of the fuel gas to efficiently execute the ventilation. In this case, it is sufficient for the ventilation outlet 43 to be disposed at the lowermost portion of the roof portion of the case 7 so as to discharge the air to the lower side of the case 7 or the periphery of the lower portion. By disposing the receiving portion with a gradient in the case 7, the discharge of the fuel gas received by the receiving portion can be further facilitated and the stagnation of the fuel gas can be further suppressed. Thus, the ventilation can be efficiently executed.

The fuel detector 8 is disposed inside or outside the case 7, and detects the fuel gas that has leaked to the outside of the engine 2. The fuel detector 8 may be configured by a sensor that detects the amount and the concentration of a toxic substance (ammonia, methanol, or the like) in ambient air, and detect the fuel gas on the basis of the detection result. Alternatively, the fuel detector 8 may be configured by a sensor that detects environmental information such as the temperature and the pressure regarding the ambient air, and detect the fuel gas on the basis of change in the environmental information, or the like.

As an arrangement example of the fuel detector 8, the fuel detector 8 is disposed at the lower portion of the case 7 as illustrated in FIG. 1 in order to detect the fuel gas that has lowered to the lower portion of the case 7 when the fuel gas having vapor specific gravity higher than 1 is used as the mixture that is supplied to the combustion chambers 21a and is composed of the fuel and air. For example, as examples of the arrangement at the lower portion of the case 7, the fuel detector 8 may be disposed, inside the case 7, on the bottom surface or in the vicinity of the bottom surface such as on the upper side of the bottom surface, or be disposed on the lower side, a lateral side, or the like, of the lower portion outside the case 7.

Further, when the fuel gas having vapor specific gravity lower than 1 is used as the mixture that is supplied to the combustion chambers 21a and is composed of the fuel and air, the fuel detector 8 is disposed at the upper portion of the case 7 as illustrated in FIG. 3 in order to detect the fuel gas that has risen to the upper portion of the case 7. For example, the fuel detector 8 may be disposed, inside the case 7, under a ceiling surface or in the vicinity of the ceiling surface such as on the lower side of the ceiling surface, or be disposed on the upper side, a lateral side, or the like, of the upper portion outside the case 7.

The notification portion 9 notifies a warning against an abnormality that has occurred in the engine system 1 by sound of a buzzer, or the like, or light of a lamp, or the like. The notification portion 9 may be configured to notify the warning by the sound and/or the light in accordance with control by the control unit 10. The notification portion 9 may change the length, interval, or intensity of the sound or the light according to the type of abnormality, that is, the type of warning. The notification portion 9 may include a plurality of lamps at various positions and turn on the lamp at the position around which an abnormality has occurred.

The control unit 10 is a computer such as an engine control unit (ECU) that controls operation of the engine 2, and includes a CPU, a ROM, a RAM, and the like. The control unit 10 is configured to control each portion of the engine 2. The control unit 10 may store various programs for controlling the engine 2 and control the engine 2 by reading out and executing a program.

In particular, according to a predetermined condition, for example, on the condition that the leakage of the fuel gas from the engine 2 has been detected by the fuel detector 8, the control unit 10 controls each portion to cope with the leakage. For example, when the leakage of the fuel gas has been detected, the control unit 10 controls the notification portion 9 to notify a warning according to the fuel detection. At this time, the control unit 10 causes the notification portion 9 to notify the warning to identify the fuel detection by sound and/or light. The control unit 10 may cause a notification of the warning different depending on the position of the fuel detector 8 that has detected the fuel, or cause a notification of the warning by the notification portion 9 at a position corresponding to the position of the fuel detector 8.

Moreover, when the leakage of the fuel gas has been detected, the control unit 10 controls the ventilation fan 46 disposed at the ventilation outlet 43 or the ventilation discharge passage 45 of the case 7 such that actuation of the ventilation fan 46 according to the fuel detection is executed. At this time, the control unit 10 may execute control such that the actuation intensity of the ventilation fan 46 that is always actuated during operation of the engine 2 is made comparatively low when the fuel has not been detected and the actuation intensity is made comparatively high when the fuel has been detected. In the case in which a plurality of ventilation fans 46 are disposed, the control unit 10 may execute control such that part of the ventilation fans 46 is stopped when the fuel has not been detected and the number of ventilation fans 46 operated is increased when the fuel has been detected.

The control unit 10 may determine the detection result (for example, the concentration or the amount per unit time) of the fuel gas by the fuel detector 8 in a stepwise manner, and control the ventilation fan 46 in a stepwise manner according to the determination result. For example, the control unit 10 may execute control such that the actuation intensity of the ventilation fan 46 is made higher or the number of ventilation fans 46 operated is made larger when the concentration of the fuel gas is higher or the amount thereof is larger.

As described above, according to the present embodiment, the engine system 1 including the engine 2 that operates by the fuel containing the toxic substance includes the case 7 that surrounds the engine 2 and the fuel detector 8 that is disposed inside or outside the case 7 and detects the fuel that has leaked to the outside of the engine 2. The fuel is detected by using the fuel detector 8 disposed at the lower portion of the case 7 when the vapor specific gravity of the fuel is higher than the predetermined threshold (for example, 1). The fuel is detected by using the fuel detector 8 disposed at the upper portion of the case 7 when the vapor specific gravity of the fuel is lower than the predetermined threshold (for example, 1). The fuel containing the toxic substance is either ammonia or methanol.

This configuration allows the engine system 1 to suppress, by the case 7, the diffusion of the fuel (fuel gas) that leaks from the engine 2 and contains the toxic substance to the external of the engine system 1. Further, the engine system 1 can rapidly cope with the leakage of the fuel by detecting the fuel that leaks from the engine 2 and contains the toxic substance by the fuel detector 8.

According to the present embodiment, the engine system 1 includes the intake inlet 40 for taking in air to be supplied to the engine 2 from the outside of the case 7 and the ventilation outlet 43 that is disposed independently of the intake inlet 40 and is used to ventilate the inside of the case 7 and discharge gas inside the case to the outside of the case 7.

This can suppress mixing of the toxic substance that has leaked from the engine 2 into air other than the fuel supplied to the engine 2. **In a** conventional generator package, or the like, to which an engine system is applied, in general, the intake inlet of an engine is configured to double as a ventilation opening (ventilator). **In** this case, there is a possibility that the fuel (gas) that has leaked from the engine and contains a toxic substance leaks from the ventilation opening into a space in which a person is present outside the engine system. In contrast, in the present embodiment, the fuel that has leaked from the engine 2 and contains the toxic substance is discharged from the ventilation outlet 43 into a different space from the intake inlet 40. Thus, the fuel is not discharged into a space in which a person is present outside the engine system 1.

According to the present embodiment, the engine system 1 includes the ventilation discharge passage 45 that allows the ventilation outlet 43 leading to the inside of the case 7 to communicate with the outside of the building, the housing, or the mobile object in which the engine 2 is installed. The ventilation discharge passage 45 is configured to be sealed except for both ends including the ventilation outlet 43.

This allows the ventilation discharge passage 45 to have a structure that prevents discharged ventilation air from leaking at an intermediate portion. Thus, the fuel that has leaked from the engine 2 and contains the toxic substance can be safely guided to a place that is separate from the engine system 1 and where there is no person.

According to the present embodiment, the engine system 1 includes the notification portion 9 that notifies a warning according to detection of the fuel by the fuel detector 8.

Due to this, in response to the leakage of the fuel containing the toxic substance from the engine 2, the danger can be notified by notifying the warning, and coping with the leakage can be prompted.

According to the present embodiment, the engine system 1 includes the ventilation fan 46 actuated according to detection of the fuel by the fuel detector 8.

Due to this, by automatically actuating the ventilation fan 46 in response to the leakage of the fuel containing the toxic substance from the engine 2, safety against the toxic substance can be ensured for persons outside the engine system 1.

In the above-described embodiment, the description has been given of the example in which, in the engine system 1, the fuel detector 8 is disposed at the lower portion of the case 7 when the fuel gas having vapor specific gravity higher than 1 is used and the fuel detector 8 is disposed at the upper portion of the case 7 when the fuel gas having vapor specific gravity lower than 1 is used. However, the present invention is not limited to this example. For example, the fuel detectors 8 may be disposed at both the upper portion and the lower position of the case 7, and the engine system 1 may use the fuel detector 8 disposed at the upper portion and the fuel detector 8 disposed at the lower position with switching therebetween depending on the vapor specific gravity of the fuel gas used.

In the engine system 1, the fuel detector 8 may be disposed at another position in addition to the upper portion and/or the lower portion of the case 7 or instead of them.

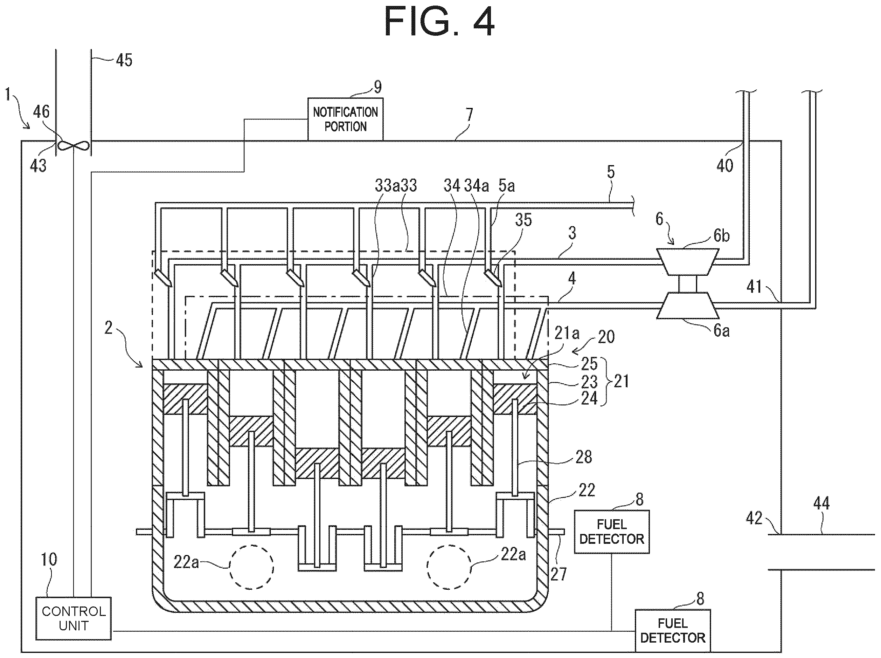

For example, as illustrated in FIG. 4, the fuel detector 8 may be disposed near the crankshaft 27 in order to detect the fuel (fuel gas) that has leaked to the outside of the engine 2 and in the vicinity of the crankshaft 27 of the engine 2 and contains the toxic substance. In this case, it is sufficient for the fuel detector 8 to be disposed such that the fuel containing the toxic substance can be detected before the inside of the case 7 is filled with this fuel. Specifically, in the vicinity of a shaft hole of the crankshaft 27 in the crankcase 22, the fuel detector 8 may be disposed to be attached to the crankcase 22 or be disposed separately from the crankcase 22.

In the engine 2 that uses the fuel containing the toxic substance, the toxic substance is contained also in a blow-by gas generated inside the crankcase 22. At the shaft hole of the crankcase 22, the crankshaft 27 is supported with an oil seal such as a labyrinth seal therebetween without sealing in some cases. Thus, the blow-by gas inside the crankcase 22 leaks from the shaft hole of the crankshaft 27, and the like, in some cases. As a countermeasure against this problem, in the engine system 1, the fuel containing the toxic substance can be detected by the fuel detector 8 disposed near the crankshaft 27. Therefore, it is possible to cope with the case of the leakage of the fuel containing the toxic substance from the vicinity of the crankshaft 27.

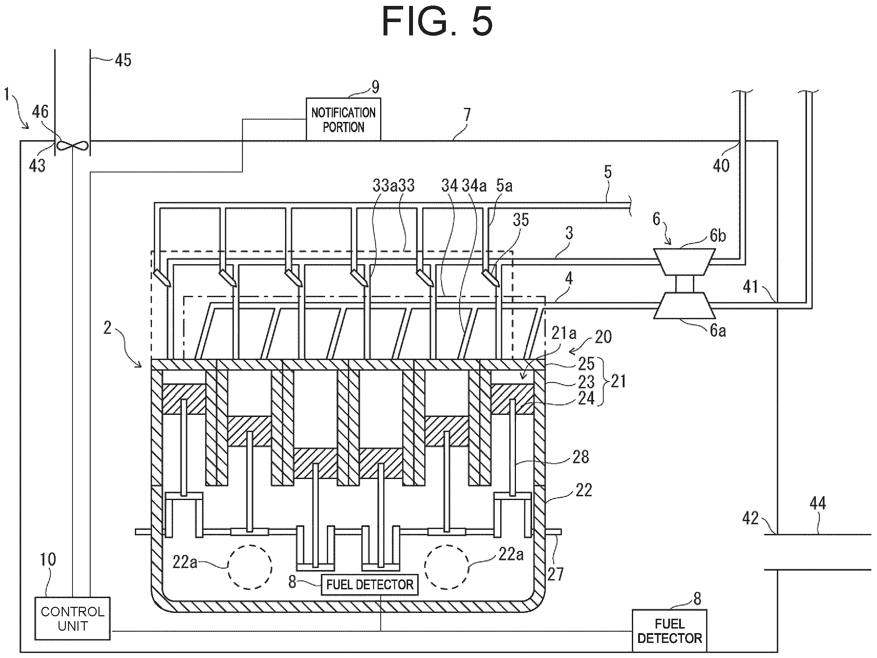

Further, as illustrated in FIG. 5, the fuel detector 8 may be disposed near the explosion-proof valve 22a in order to detect the fuel (fuel gas) that has leaked to the outside of the engine 2 and in the vicinity of the explosion-proof valve 22a of the engine 2 and contains the toxic substance. In this case, it is sufficient for the fuel detector 8 to be disposed such that the fuel containing the toxic substance can be detected before the inside of the case 7 is filled with this fuel. Specifically, in the vicinity of the explosion-proof valve 22a of the crankcase 22, the fuel detector 8 may be disposed to be attached to the crankcase 22 or be disposed separately from the crankcase 22.

The explosion-proof valve 22a of the crankcase 22 is opened when the internal pressure of the crankcase 22 becomes high. Thus, the blow-by gas inside the crankcase 22 leaks through the explosion-proof valve 22a in some cases. As a countermeasure against this problem, in the engine system 1, the fuel containing the toxic substance can be detected by the fuel detector 8 disposed near the explosion-proof valve 22a. Therefore, it is possible to cope with the case of the leakage of the fuel containing the toxic substance from the vicinity of the explosion-proof valve 22a.

In the above-described embodiment, the description has been given of the example in which, in the engine system 1, notification of a warning by the notification portion 9 and actuation of the ventilation fan 46 are executed as coping with leakage in the case in which the fuel detector 8 has detected the fuel containing the toxic substance. However, the present invention is not limited to this example. For example, the engine system 1 may include emergency stop, deceleration, and the like, of the engine 2 as the coping with leakage. Further, when the engine 2 is configured by a dual fuel engine, the engine system 1 may execute control to operate the engine 2 with reduction in the use amount of the fuel containing the toxic substance as the coping with leakage. The control unit 10 may determine the detection result of the fuel gas by the fuel detector 8 in a stepwise manner, and execute control to select and use the above-described various kinds of coping with leakage depending on the determination result.

The fuel containing a toxic substance (deleterious substance prescribed in the Poisonous and Deleterious Substances Control Act in Japan) in the present invention corresponds to the case in which the toxic substance is the fuel like ammonia, methanol, and the like.

Note that the present invention can be properly modified within a range that does not contradict a gist or a concept of the present invention that can be read throughout the claims and the specification, and an engine system involving such modifications is also included in the technical concept of the present invention.

### [Appendixes of Invention]

An outline of the invention extracted from the above-described embodiment will be additionally described below. Configurations and processing functions described in the following appendixes may be selected and be implemented in any combination.

### <Appendix 1>

An engine system including an engine that operates by a fuel containing a toxic substance, the engine system including:
a case that surrounds the engine; and
a fuel detector that is disposed inside or outside the case and detects the fuel that has leaked to outside of the engine,
wherein the fuel is detected by using the fuel detector disposed at a lower portion of the case when vapor specific gravity of the fuel is higher than a predetermined threshold, and
the fuel is detected by using the fuel detector disposed at an upper portion of the case when the vapor specific gravity of the fuel is lower than the predetermined threshold.

### <Appendix 2>

The engine system according to appendix 1, wherein the engine system includes:
an intake inlet for taking in air to be supplied to the engine from the outside of the case; and
a ventilation outlet that is disposed independently of the intake inlet and is used to ventilate inside of the case and discharge gas inside the case to the outside of the case.

### <Appendix 3>

The engine system according to appendix 2, further including:
a ventilation discharge passage that allows the ventilation outlet leading to the inside of the case to communicate with outside of a building, a housing, or a mobile object in which the engine is installed,
wherein the ventilation discharge passage is sealed except for both ends including the ventilation outlet.

### <Appendix 4>

The engine system according to any of appendixes 1 to 3, wherein the engine system includes the fuel detector that detects the fuel that has leaked to the outside of the engine and in vicinity of a crankshaft of the engine.

### <Appendix 5>

The engine system according to any of appendixes 1 to 4, wherein the engine system includes the fuel detector that detects the fuel that has leaked to the outside of the engine and in vicinity of an explosion-proof valve of the engine.

### <Appendix 6>

The engine system according to any of appendixes 1 to 5, further including a notification portion that notifies a warning according to detection of the fuel by the fuel detector.

### <Appendix 7>

The engine system according to any of appendixes 1 to 6, further including a ventilation fan actuated according to detection of the fuel by the fuel detector.

### <Appendix 8>

The engine system according to any of appendixes 1 to 7, wherein the fuel is either ammonia or methanol.

### REFERENCE SIGNS LIST

1 Engine system
2 Engine
3 Intake passage
4 Exhaust passage
5 Fuel supply path
6 Turbocharger
7 Case
8 Fuel detector
9 Notification portion
10 Control unit
20 Cylinder block
21 Cylinder
21a Combustion chamber
22 Crankcase
22a Explosion-proof valve
23 Cylinder body
24 Piston
25 Cylinder head
26 Ignition device
27 Crankshaft
28 Connecting rod
29 Intake port
30 Intake valve
31 Exhaust port
32 Exhaust valve
33 Intake manifold
34 Exhaust manifold
35 Main fuel supply device
40 Intake inlet
41 Exhaust outlet
42 Ventilation inlet
43 Ventilation outlet
44 Ventilation introduction passage
45 Ventilation discharge passage
46 Ventilation fan

## Claims

1. An engine system including an engine that operates by a fuel containing a toxic substance, the engine system comprising:
a case that surrounds the engine; and
a fuel detector that is disposed inside or outside the case and detects the fuel that has leaked to outside of the engine,
wherein the fuel is detected by using the fuel detector disposed at a lower portion of the case when vapor specific gravity of the fuel is higher than a predetermined threshold, and
the fuel is detected by using the fuel detector disposed at an upper portion of the case when the vapor specific gravity of the fuel is lower than the predetermined threshold.

2. The engine system according to claim 1, wherein the engine system includes:
an intake inlet for taking in air to be supplied to the engine from the outside of the case; and
a ventilation outlet that is disposed independently of the intake inlet and is used to ventilate inside of the case and discharge gas inside the case to the outside of the case.

3. The engine system according to claim 2, further comprising:
a ventilation discharge passage that allows the ventilation outlet leading to the inside of the case to communicate with outside of a building, a housing, or a mobile object in which the engine is installed,
wherein the ventilation discharge passage is sealed except for both ends including the ventilation outlet.

4. The engine system according to claim 1, wherein the engine system includes the fuel detector that detects the fuel that has leaked to the outside of the engine and in vicinity of a crankshaft of the engine.

5. The engine system according to claim 1, wherein the engine system includes the fuel detector that detects the fuel that has leaked to the outside of the engine and in vicinity of an explosion-proof valve of the engine.

6. The engine system according to claim 1, further comprising a notification portion that notifies a warning according to detection of the fuel by the fuel detector.

7. The engine system according to claim 1, further comprising a ventilation fan actuated according to detection of the fuel by the fuel detector.

8. The engine system according to claim 1, wherein the fuel is either ammonia or methanol.
